# NEW EUROPEAN PATENT SPECIFICATION

(11) **EP 0 653 153 B2**
(45) Date of publication and mention of the opposition decision: **27.10.2004**
(45) Mention of the grant of the patent: 05.01.2000
(21) Application number: 94203214.5
(22) Date of filing: 04.11.1994
(51) Int. Cl.: A01J 7/00, A01J 11/06

(54) **A milking machine**
Melkvorrichtung
Machine à traire

(30) Priority: 17.11.1993 NL 9301985
(43) Date of publication of application: 17.05.1995
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- EP-A- 0 516 246
- US-A- 4 572 105
- US-A- 4 636 306
- DATABASE WPI Week 8535, Derwent Publications Ltd., London, GB; AN 85-210278 & DD-A-221 625 (KOMB FORTS LANDMASC)

## Description

The present invention relates to a milking machine according to the preamble of claim 1. Such a filtering device for liquids in general is disclosed in US-A-4 636 306.

Another filtration device is disclosed in DD-A-221625. This device comprises a disc with filter segments. Each time a cow is milked, a filter segment is used to filter the milk by moving the disc in a different position. After milking the entire herd the filter disc is removed, cleaned and disinfected. The filtration device as disclosed in DD-A-221625 has the drawback that it has to be exchanged manually. This is time-consuming and inconvenient. Also, the filter exchange interrupts the milking process. This is particularly inconvenient in systems of continuous milking, such as robotic milking systems. NL-A-9300143 discloses a filtration device which enables exchanging the filters without interrupting the milking process. This device has the drawback that the filters need to be replaced and cleaned manually which is again time-consuming, expensive and inconvenient.

To enable an uninterrupted purification of the milk, a filtration device according to the invention is provided with the features of claim 1. In this way the flow of milk from animals milked in succession can be purified by filtration by means of a filter cleaned regularly without requiring that additional time is allotted for filter cleaning. When the milk is led through a first filter, a second filter can be cleaned.

In principle, it will be sufficient to provide two filters in the filtration device, so that, when the milk is passed through one filter, the other filter is cleaned and, after this other filter has been cleaned and a certain number of cows has been milked subsequently, the milk is passed through the cleaned filter, whereas then the first-mentioned filter is being cleaned. For this purpose there are provided automatically operated change-over means to direct at the same time the milk flow in one direction through a first filter and a cleaning liquid in the opposite direction through a second filter.

The change-over means may be made up of multi-way valves, particularly computer-controlled three-way valves, by which in a first position milk, and in a second position a cleaning liquid is allowed to pass through a filter. The filters may be of tubular design and, extending upwardly, they may be arranged in parallel. The cleaning liquid can be hot water, which is fed pulsatingly through a relevant filter.

A filtration device in which a flow of milk is automatically redirected from a first filter to a second one, with the unused filter(s) being cleaned, can be applied advantageously in an automatic milking machine. The milking machine can then be provided with a milking robot for connecting teat cups automatically to the teats of an animal present in a milking parlour and for subsequently milking this animal automatically, whilst the milk obtained is routed through an automatically operative filtration device and is purified there. Then, the filtration device is preferably disposed near the milking parlour, whilst the filtration device can be included in that part of the milk line system which extends from the teat cups to a milk meter being part of the milking machine.

The invention will now be further explained with reference to an exemplary embodiment of the invention as represented in the following drawings, wherein:
Figure 1 shows a milking parlour and a schematically represented part of a milking machine in accordance with the invention;
Figure 2 shows a filtration device according to the invention such as it is applied in the milking machine part schematically represented in Figure 1, and
Figure 3 is a plan view of the filtration device in Figure 2.

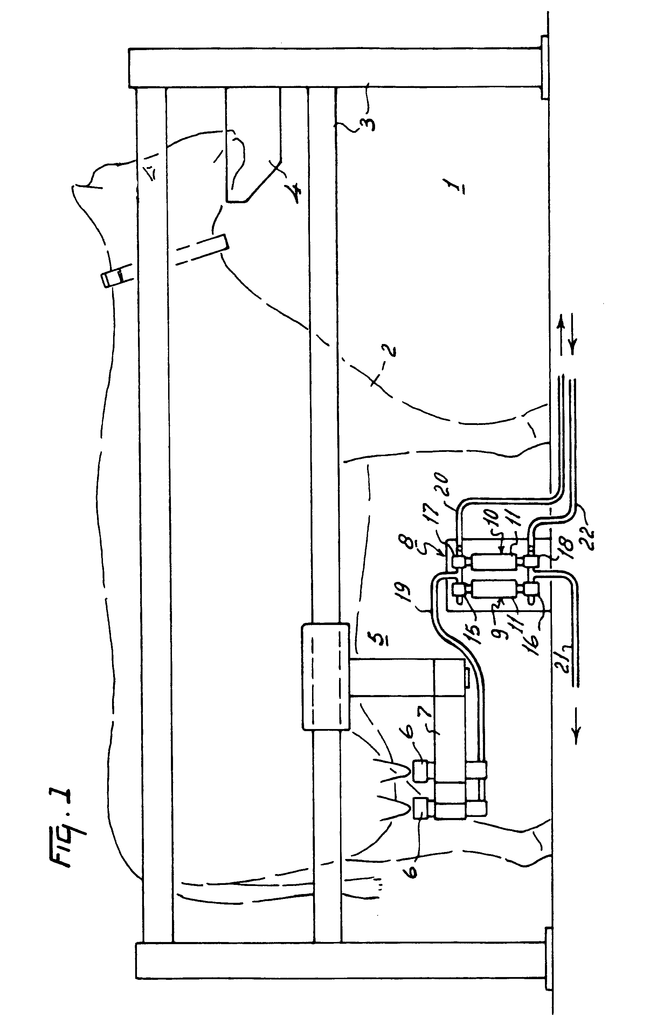

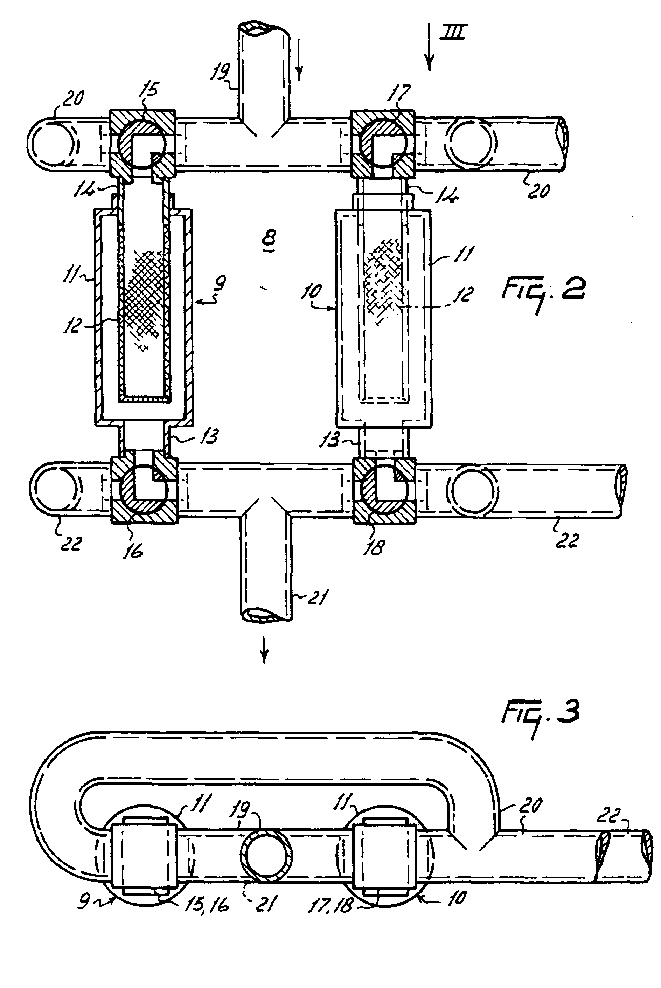

Figure 1 shows a schematic representation of a milking parlour 1, in which there is a cow 2. As is usual, the milking parlour is constituted of a fencing 3, in which there are provided an entrance and an exit for the cow. At the front side of the milking parlour there is an automatic feeder, of which the feed trough 4 is schematically represented. On the lowermost beam of the fencing 3 on the longitudinal side of the milking parlour 1, as shown in Figure 1, there is provided a milking robot 5. Though not further indicated in the drawings, the milking robot 5 has all degrees of freedom necessary to put the teat cups 6 disposed near the end of a robot arm 7 of the milking robot 5 into a position underneath the teats of the cow 2 and to connect the teat cups 6 to the teats of the cow 2. The milking machine is provided with a milking robot 5 for automatically connecting teat cups to the teats of an animal present in the milking parlour 1 and for subsequently automatically milking this animal. The milk obtained through the individual teat cups can be directed to an individual filtration device 8, where the milk is purified by filtration. Naturally, it is also feasible to direct the milk obtained by using all four of the teat cups 6, through a single line, to a single filtration device 8 to filter the total flow of milk from the cow. The milking machine can comprise a single filtration device as well as a plurality of filtration devices for filtering milk. The filtration device is placed near the milking parlour 1, in Figure 1 alongside of this milking parlour. There the filtration device is included in that part of the milk line system which is between the teat cups and the further milking equipment, such as a milk meter or the milk tank in which the milk obtained is collected. The filtration device 8 is depicted in more detail in Figures 2 and 3. The filtration device 8 comprises two filters 9 and 10. Extending in an upward direction, these filters are disposed in parallel, and either one is composed of a tubular outer jacket 11 in which a filter element 12 extends virtually over the full length. At the bottom of the outer jacket 11 there is provided an opening 13 in each filter, while there is provided an opening 14 at the top of the filter element which pierces the outer jacket 11 at the top of the filter. A liquid, particularly milk, can be put into the filter element 12 through the opening 14, with the milk flowing into the space between the filter element 12 and the outer jacket 11, via the wall of the filter element 12, and being carried off from there via the opening 13. By supplying milk through the opening 14 and carrying it off through the opening 13, any contaminants included in the milk are left on the interior side of the filter element 12. The filter can be cleaned by putting a cleaning liquid into the space between the outer jacket 11 and the filter element 12 through the opening 13. This cleaning liquid enters the space in the filter element 12 through the wall of the filter element 12 and it is carried off through opening 14. By forcing a cleaning liquid in this direction through the filter, the particles which had accumulated in the interior space of the filter element 12 are washed away and removed from the filter. The filters 9 and 10 in Figure 2 can be passed through by the milk from the top downwards, whereas for the purpose of cleaning, a cleaning liquid is fed from the bottom upwards through the filter. The direction of flow of the cleaning liquid is consequently opposite to that of the liquid to be purified, milk in this case. To be used as a cleaning liquid is, for instance, hot water to which special cleaning agents have been added, if required. Furthermore, the cleaning liquid can be pulsatingly fed through the filter, which increases the cleaning effect. The openings 13 and 14 of the filters 9 and 10 are connected to automatically operated change-over means 15 - 18 in the form of multi-way valves, three-way valves in this case. In a first position, the three-way valves 15 - 18 enable milk to pass through the filters and in a second position cleaning liquid. Further, a milk inlet line 19 and a cleaning-liquid outlet line 20 are connected to the three-way valves 15 and 17, while a milk outlet line 21 and a cleaning liquid inlet line 22 are connected to the three-way valves 16 and 18. In the position of the three-way valves as shown in Figure 2, milk is discharged by the line 21 via the three-way valve 15, the filter 9 and the three-way valve 16, whereas at the same time a cleaning liquid is fed through the line 22, the three-way valve 18, the filter 10 and the three-way valve 17 into the line 20 for discharge. By changing over the three-way valves 15 - 18, the milk can be led through the filter 10 and the cleaning liquid through the filter 9. The change-over of the three-way valve is under the control of a computer, not further detailed here, which computer has otherwise control of the whole milking machine including the milking robot and accessory devices. The computer can be programmed such that the change-over of the three-way valves takes place after a predetermined number of cows has been milked. Particularly, the filtration device can be changed over each time when a single cow has been milked, so that the milk from each cow is invariably led through a cleaned filter.

The invention is by no means limited to the embodiment reflected here, but it also relates to all kinds of feasible variants and modifications thereof, of course, falling within the scope of protection of the claims following hereinafter. In particular, there can be provided more than two filters in a filtration device and, as stated before, a plurality of filtration devices can be installed.

## Claims

1. A milking machine for milking animals, such as cows, comprising one or more filtration devices (8), the filtration device being provided with at least two filters (9, 10), and with connections to pass alternately milk in a first direction through a filter and a cleaning liquid through this filter in a second direction, opposite to the first direction, and wherein, when the connections are in position to pass milk through one filter a cleaning liquid may pass through another filter, **characterized in that** there are provided automatically operated change-over means (15 to 18) to provide for cleaning of one filter when milk is passed through the other filter, and for passing, after the first filter has been cleaned and a predetermined number of cows has been milked subsequently, the milk through the cleaned filter, whereas then the said other filter is being cleaned.

2. A milking machine according to claim 1, **characterized in that** the filtration device (8) comprises two filters (9, 10).

3. A milking machine according to any one of the preceding claims, **characterized in that** there are provided automatically operated change-over means (15 to 18) to direct at the same time the milk flow in one direction through a first filter (9; 10) and a cleaning liquid in the opposite direction through a second filter (10; 9).

4. A milking machine according to any one of the preceding claims, **characterized in that** the change-over means (15 to 18) are constituted by multi-way valves.

5. A milking machine according to claim 4, **characterized in that** the multi-way valves (15 to 18) comprise computer-controlled three-way valves, which in a first position allow milk to pass through a filter (9, 10) and in a second position a cleaning liquid.

6. A milking machine according to any one of the preceding claims, **characterized in that** a filter (9, 10) is of tubular design.

7. A milking machine according to claim 6, **characterized in that** the filters (9, 10) extending upwardly are arranged in parallel.

8. A milking machine according to any one of the preceding claims, **characterized in that** the cleaning liquid is hot water, which is fed pulsatingly through a filter (9, 10).

9. A milking machine according to any one of the preceding claims, **characterized in that** it is provided with a milking robot (5) for connecting teat cups (6) automatically to the teats of an animal present in a milking parlour (1) and for subsequently milking this animal automatically, whilst the milk obtained is routed through an automatically cleaned filtration device (8) and is purified there.

10. A milking machine according to claim 9, **characterized in that** the filtration device (8) is disposed near the milking parlour (1).

11. A milking machine according to claim 9 or 10, **characterized in that** the filtration device (8) is included in the milk line system between the teat cups (6) and a milk meter being part of the milking machine.

## Patentansprüche

1. Melkmaschine zum Melken von Tieren, wie z. B. Kühen, die eine oder mehrere Filtervorrichtungen (8) umfaßt, wobei die Filtervorrichtung mit mindestens zwei Filtern (9, 10) und mit Verbindungen versehen ist, um abwechselnd Milch in einer ersten Richtung durch ein Filter und eine Reinigungsflüssigkeit durch dieses Filter in einer zweiten, zu der ersten Richtung entgegengesetzten Richtung zu leiten, und wobei, wenn die Verbindungen in eine Position eingestellt sind, um Milch durch ein Filter zu leiten, eine Reinigungsflüssigkeit durch ein anderes Filter fließen kann,
**dadurch gekennzeichnet, daß** automatisch betätigte Umschaltvorrichtungen (15 bis 18) vorgesehen sind, um ein Filter zu reinigen, wenn durch das andere Filter Milch geleitet wird, und um nach dem Reinigen des ersten Filters und dem anschließenden Melken einer vorgegebenen Anzahl von Kühen die Milch durch das gereinigte Filter zu leiten, während das andere Filter gereinigt wird.

2. Melkmaschine nach Anspruch 1,
**dadurch gekennzeichnet, daß** die Filtervorrichtung (8) zwei Filter (9, 10) aufweist.

3. Melkmaschine nach einem der vorhergehenden Ansprüche,
**dadurch gekennzeichnet, daß** automatisch betätigte Umschaltvorrichtungen (15 bis 18) vorgesehen sind, um zur selben Zeit den Milchstrom in einer Richtung durch ein erstes Filter (9; 10) und eine Reinigungsflüssigkeit in entgegengesetzter Richtung durch ein zweites Filter (10; 9) zu leiten.

4. Melkmaschine nach einem der vorhergehenden Ansprüche,
**dadurch gekennzeichnet, daß** die Umschaltvorrichtungen (15 bis 18) durch Mehrwegeventile gebildet sind.

5. Melkmaschine nach Anspruch 4,
**dadurch gekennzeichnet, daß** die Mehrwegeventile (15 bis 18) rechnergesteuerte Dreiwegeventile aufweisen, die in einer ersten Position Milch und in einer zweiten Position eine Reinigungsflüssigkeit durch ein Filter (9, 10) strömen lassen.

6. Melkmaschine nach einem der vorhergehenden Ansprüche,
**dadurch gekennzeichnet, daß** ein Filter (9, 10) rohrförmig ausgebildet ist.

7. Melkmaschine nach Anspruch 6,
**dadurch gekennzeichnet, daß** die aufwärts gerichteten Filter (9, 10) parallel zueinander angeordnet sind.

8. Melkmaschine nach einem der vorhergehenden Ansprüche,
**dadurch gekennzeichnet, daß** die Reinigungsflüssigkeit aus heißem Wasser besteht, das pulsierend durch ein Filter (9, 10) geleitet wird.

9. Melkmaschine nach einem der vorhergehenden Ansprüche,
**dadurch gekennzeichnet, daß** die Melkmaschine einen Melkroboter (5) zum automatischen Anschließen von Zitzenbechern (6) an die Zitzen eines in einem Melkstand (1) befindlichen Tieres und zum anschließenden automatischen Melken dieses Tieres aufweist, wobei die gewonnene Milch durch eine automatisch gereinigte Filtervorrichtung (8) geleitet und darin gereinigt wird.

10. Melkmaschine nach Anspruch 9,
**dadurch gekennzeichnet, daß** die Filtervorrichtung (8) nahe dem Melkstand (1) angeordnet ist.

11. Melkmaschine nach Anspruch 9 oder 10,
**dadurch gekennzeichnet, daß** die Filtervorrichtung (8) in dem Milchleitungssystem zwischen den Zitzenbechern (6) und einem Milchmengenmesser angeordnet ist, der Teil der Melkmaschine ist.

## Revendications

1. Machine à traire pour animaux de traite, tels que les vaches, comprenant au moins un dispositif de filtration (8), le dispositif de filtration (8) est muni d'au moins deux filtres (9, 10) et aussi de connexions pour faire passer alternativement le lait dans une première direction à travers un filtre et un liquide de nettoyage à travers ce filtre dans une seconde direction opposée à cette première direction et dans lequel, quand les connexions sont en position pour faire passer le lait à travers un filtre, un liquide de nettoyage peut passer à travers un autre filtre, **caractérisée en ce que** :
- des moyens de commutation (15 à 18) activés automatiquement sont agencés pour prévenir le nettoyage d'un filtre quand le lait est passé à travers l'autre filtre, et le passage, après que le premier filtre ait été nettoyé et qu'un nombre prédéterminé de vaches aient été traites, du lait au travers du filtre nettoyé, alors que l'autre filtre est en cours de nettoyage.

2. Machine à traire selon la revendication 1, **caractérisée en ce que** le dispositif de filtration (8) comporte deux filtres (9, 10).

3. Machine à traire selon l'une quelconque des revendications précédentes, **caractérisée en ce que** des moyens de commutation actionnés automatiquement (15 à 18) sont prévus pour diriger en même temps l'écoulement de lait dans une première direction à travers un premier filtre (9 ; 10) et un liquide de nettoyage dans la direction opposée à travers un second filtre (10 ; 9).

4. Machine à traire selon l'une quelconque des revendications précédentes, **caractérisée en ce que** les moyens de commutation (15 à 18) sont constitués de vannes multidirectionnelles.

5. Machine à traire selon la revendication 4, **caractérisée en ce que** les vannes multidirectionnelles (15 à 18) sont constituées de vannes trois voies commandées par ordinateur, qui, dans une première position, permettent au lait de passer à travers un filtre (9, 10) et, dans une seconde position, le permettent à un liquide de nettoyage.

6. Machine à traire selon l'une quelconque des revendications précédentes, **caractérisée en ce qu'**un filtre (9, 10) a une conception tubulaire.

7. Machine à traire selon la revendication 6, **caractérisée en ce que** les filtres (9, 10) s'étendant vers le haut sont agencés en parallèle.

8. Machine à traire selon l'une quelconque des revendications précédentes, **caractérisée en ce que** le liquide de nettoyage est de l'eau chaude, qui est acheminée par pulsations à travers un filtre (9, 10).

9. Machine à traire selon l'une quelconque des revendications précédentes, **caractérisée en ce qu'**elle est munie d'un robot de traite (5) pour relier de manière automatique des gobelets trayeurs (6) aux trayons d'un animal présent dans un box de traite (1) et pour traire par la suite cet animal de manière automatique, alors que le lait obtenu est acheminé à travers un dispositif de filtration nettoyé automatiquement (8) et y est purifié,

10. Machine à traire selon la revendication 9, **caractérisée en ce que** le dispositif de filtration (8) est disposé à proximité du box de traite (1).

11. Machine à traire selon la revendication 9 ou 10, **caractérisée en ce que** le dispositif de filtration (8) est inclus dans le système de ligne de lait existant entre les gobelets trayeurs (6) et un dispositif de mesure de lait qui est une partie de la machine à traire.
